# EUROPEAN PATENT APPLICATION

(11) **EP 0 984 551 A2**
(43) Date of publication of application: **08.03.2000**
(21) Application number: 99202427.3
(22) Date of filing: 22.07.1999
(51) Int. Cl.: H02P 7/285, H02K 11/00

(54) **Speed variator brush-holder for direct-current motors**

(30) Priority: 04.09.1998 IT MI981957
(71) Applicant: Semar S.r.l., 14037 Portacomaro (Asti) (IT)
(72) Inventor: Parola, Cesare, 20099 Sesto San Giovanni (Milano) (IT); Ferrara, Antonio, 14030 Callianetto (Asti) (IT)
(74) Representative: Ferroni, Filippo

(57) **Abstract**

The invention relates to brush-holders for direct-current electric motors. As is known, indeed, for operation of these motors a suitable voltage is applied to the armature mounted on the rotor, by means of a frictional contact between the brushes (1a, 1b) and the ends of the electric leads.

The brushes (1a, 1b) generally consist of small blocks of graphite material and are mounted on a support (P) commonly called brush-holder.

Advantageously, in accordance with the invention, an electronic voltage and/or current variator, which is connected to the brushes, is arranged on the support (P); in this way a brush-holder capable of adjusting the speed of rotation of the motor is obtained, while keeping the dimensions of the latter practically unchanged. Adjustment of the speed of rotation of the motor is also favoured by the arrangement of the variator on the brush-holder.

## Description

The invention relates to brush-holders for direct-current electric motors.

As is known, in most of the present applications this kind of electric motor has a rotor winding to which a supply voltage is applied by means of a frictional contact.

More particularly, this contact occurs between a cylindrical shaped commutator, consisting of a series of segments which are connected to the electric leads arranged on the rotor, and elements (called brushes) which provide the current take-off points on the external surface of the commutator.

The brushes are usually made of graphite carbon, metal-graphite carbon or other similar materials and are mounted on a special support commonly called brush-holder.

The latter may have different configurations depending on the type of brushes and motor for which it is intended and in some cases it may also have, mounted thereupon, passive components (inductances, capacitors, varistors, resistors, etc.) for reducing the electromagnetic disturbance emitted: however, the operations performed by the present brush-holders are fairly limited and basically only allow working of the associated motors at a constant voltage and speed.

The invention aims at remedying this state of the art: indeed it has the object of providing a brush-holder which allows operation of a direct-current motor, with variable speed.

This object is achieved by the incorporation into the brush-holder, of an electronic speed variator which contains active components (i.e. diodes, transistors, integrated circuits, etc.) controlled by a programmable microprocessor.

The features of the invention and the advantages thereof will be better understood with reference to the following description of a preferred and non-limiting embodiment, shown in the drawings wherein:
- Figure 1 is a block diagram of this embodiment,
- Figures 2 and 3 show respective possible physical configurations of the latter.

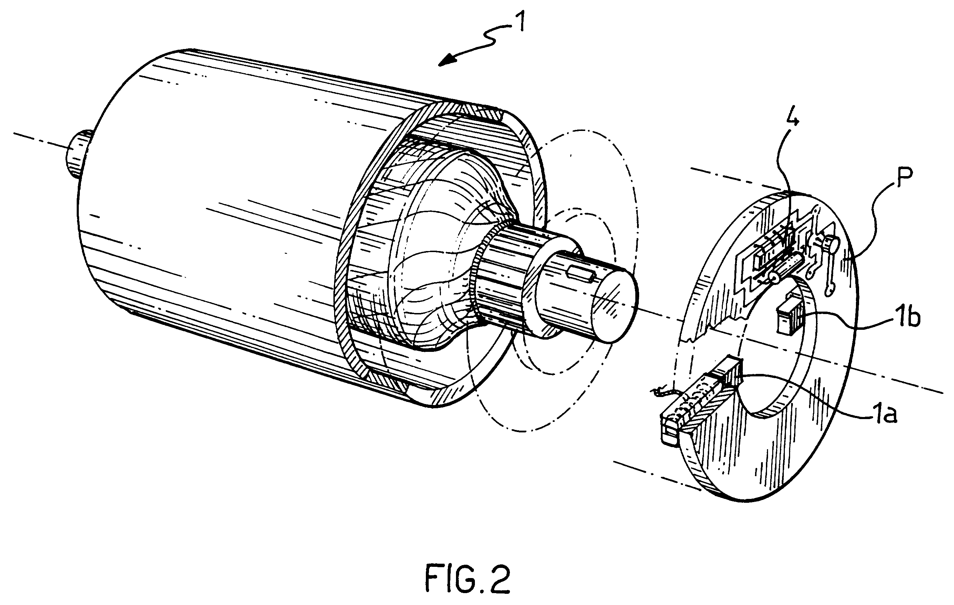

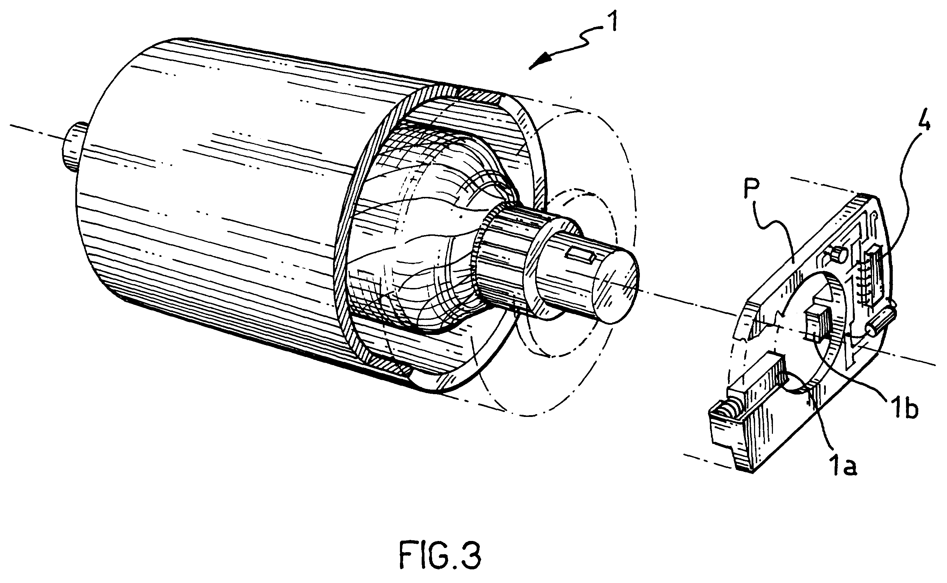

The brush-holder according to the invention consists of a support plate P made of plastics or other kind of material, shaped like an annular rim (as shown in Fig. 2 in which pan of the plate has been removed for the sake of clarity) or in a different manner (as shown in Fig. 3), but with a central opening for mounting it around the commutator of an electric motor 1.

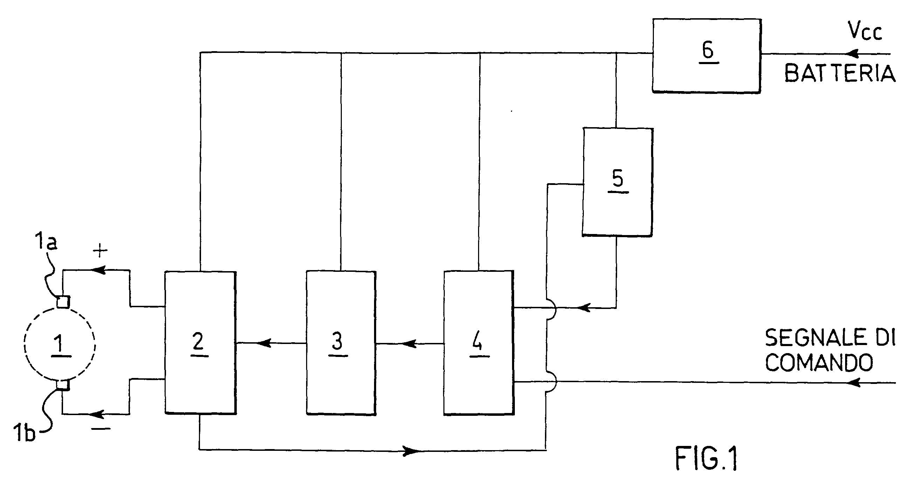

An electronic variator consisting of a circuit shown in the block diagram according to Fig. 1, is provided on the plate P; the variator is connected directly to the brushes in the sense that there are no wires extending between them, since they are both supported by said plate and hence their distance provides for this possibility (in the block diagram the spacing between brushes and variator has been emphasised for the sake of clarity of the drawing).

Upstream the motor 1 and the associated brushes 1a, 1b, the variator comprises a power section 2 which is known per se and is controlled by a driving section 3 which receives, at its input, pulses (with a frequency of between 12 and 15 kHz) modulated by a phase chopping PWM (Pulse Width Modulator) controlled by a programmable microprocessor indicated as 4 in the diagram.

The block diagram of the variator integrated in the brush-holder is completed by a control and monitoring section 5, the output of which forms one of the inputs of the microprocessor 4, and a filter section 6 consisting of various inductances and/or capacitors intended to eliminate the noises emitted by the variator itself as well as those coming from the outside.

Operation of the components referred to above takes place as follows.

The microprocessor 4 receives at its input a control signal which may be of the analog type, for example sent by means of a potentiometer, a resistive chopper, a thermistor and the like (in this case an analog/digital converter shall obviously be provided in the circuit), or of the digital type generated for example by means of push buttons.

A scale of speed steps, consisting of increasing discrete values which approximate a predefined regulating curve of the motor, is stored in the microprocessor; these values may be programmed in the microprocessor according to the various needs.

Consequently a user that operates a knob or push buttons (in the case of manual control), may choose any speed of the motor from among those stored in the microprocessor; it can be easily understood that with a variator such as that considered, it is possible to program a number of speed steps such as to satisfy practically any request, it being sufficient to choose a microprocessor suitable for this purpose.

The signal which reaches the microprocessor 4 from the control section 5 has the function of preventing operation of the motor 1, sending a reset signal to the microprocessor 4, when critical overvoltage and/or overcurrent operating conditions occur.

The microprocessor processes the variation in speed to be applied to the motor on the basis of an acceleration/deceleration ramp stored inside it.

Following to the processing performed by the microprocessor, downstream of which the driving section and the power section operate, the brushes of the motor 1 receive the voltage and/or current suitable for increasing (or decreasing) the speed of rotation of the motor until the value set by the user is reached.

From what has been described above it is therefore possible to understand how the brush-holder according to the invention achieves the object predefined initially.

Indeed, it is able to provide the variation in the speed of the motor to which it is associated, in accordance with a number of steps that can be set as required, thereby making in fact the motor an adjustable one.

From the practical point of view this result is obtained in a very simple manner owing to the use of a circuit formed by components which are of the known type and are commonly available on the market, such as, for example, the programmable microprocessor.

Furthermore, it can be seen that control of the speed variation in accordance with the scale of steps programmed in the microprocessor depends on the sending thereto of an ordinary input signal; it may be easily understood, however, that such a signal may be generated in the most different manners and not only manually as mentioned above.

Consequently it is possible to have applications wherein the speed variation is automatic; more generally, it is possible to state that the operational flexibility of the brush-holder according to the invention enhances its possible uses in a vast number of fields where it is required to use electric motors which can be adjusted manually or automatically.

A further advantageous effect which must emphasized consists in the elimination of the pickup current peaks and of the consequent mechanical stresses, in the motors to which the brush-holder according to the invention is fitted.

Indeed the armature of conventional direct-current motors, at pickup, may be subject to high currents which are dangerous for the electric leads of the rotor and give rise to mechanical stresses damaging for some components of the motor.

With the brush-holder hereby disclosed this does not occur because, at start-up and more generally at pick-up, the current supply follows a progression controlled by the microprocessor which allows the gradual increase thereof to the required value, in accordance with the acceleration ramp programmed therein.

The elimination of the current peaks and of the associated mechanical stresses thus implicitly helps the operational reliability of the motor and therefore increases its working life.

Similar considerations are also applicable for the reverse case, namely when the motor is disconnected or in any case it is desired to decrease its speed of rotation; indeed, also in these situations the speed variation is controlled by the microprocessor, which makes it to occur in accordance with a deceleration curve (ramp) programmed therein.

The controlled deceleration of the motor prevents the risk of generating overvoltages in the circuit should it, during the slowing-down stage, start to operate as a generator.

Similarly it must be pointed out how the wide range of speeds which can be obtained helps to reduce the consumption of electrical energy.

Owing to the large number of adjusting steps it is in fact possible to supply power to the motor in the manner which is most suitable for the load conditions required, without having to dissipate electric energy as instead occurs in the case of adjustment using sets of power resistors. In connection with this latter point it should be noted that the elimination of these resistors avoids the danger of their burning in the case of overheating, with obvious advantages from the safety and reliability point of view.

Finally, it must be emphasised that the fact of having incorporated the electronic speed variator in the brush-holder results in the elimination of any connection wire between it and the brushes: this facilitates the application of such a variator to direct-current motors and enhances the performance thereof.

Indeed, it can be understood that the presence of wiring between the variator and the brushes inevitably introduces an additional resistance and therefore a drop in voltage which influences correct supplying of power to the motor. Moreover, the wires for connection of the brushes could become elements through which any electromagnetic noise generated externally are conducted (owing to the antenna effect), thereby negatively affecting the speed adjustment provided by the variator.

Obviously variations in the invention with respect to the embodiment which has been described herein are also possible.

By way of example, in the case of motors with more than two poles, the electronic circuit associated with the brush-holder might be subject to modifications with respect to the block diagram shown in the drawings.

It is also evident that the functions performed by the brush-holder may be increased; for example, in addition to operate the motor only on the basis of the control signal, it would also possible to devise an adjustment in order to keep the speed constant when there is a variation in the load. This would also require some modifications to the diagram mentioned and also a suitable microprocessor, which could nevertheless still be accommodated on the brush-holder.

As regards, on the other hand, the electronic circuit of the variator, it may be directly printed, partly or wholly, on the board supporting the brushes or applied in another manner thereupon.

These and other possible variations fall however within the scope of the claims which follow.

## Claims

1. Brush-holder for direct-current motors, comprising a support (P) for the brushes (1a, 1b), characterized in that it is provided with an electronic variator (2-6) arranged on the support and connected to the brushes so as to vary the voltage and/or current to be applied to the motor by means of said brushes.

2. Brush-holder according to Claim 1, wherein the electronic variator (2-6) comprises a programmable microprocessor (4) that controls a driving section (3) which drives a power section (2) connected to the brushes (1a, 1b).

3. Brush-holder according to Claim 2, wherein the electronic variator (2-6) comprises a control section (5) connected at its input to the power section (2) and at its output to the microprocessor (4), and designed to prevent operation of the motor in the event of overvoltages and/or overcurrents.

4. Brush-holder according to any of Claims 2 and 3, wherein the electronic variator (2-6) comprises a filter section (6) for eliminating electromagnetic noises emitted by it or coming from the outside.

5. Brush-holder according to any one of the preceding claims, wherein the support (P) of the brushes (1a, 1b) is of the plate type.
